**Europäisches Patentamt**

(19) **European Patent Office**

**Office européen des brevets**

(11) Veröffentlichungsnummer: **0 144 889**
**B1**

(12) **EUROPÄISCHE PATENTSCHRIFT**

(45) Veröffentlichungstag der Patentschrift:
06.09.89

(51) Int. Cl.⁴: **B 01 D 53/34**

(21) Anmeldenummer: **84114290.4**

(22) Anmeldetag: **27.11.84**

(54) **Rauchgasentschwefelungsanlage.**

(30) Priorität: **07.12.83 DE 3344107**

(43) Veröffentlichungstag der Anmeldung:
**19.06.85 Patentblatt 85/25**

(45) Bekanntmachung des Hinweises auf die Patenterteilung:
**06.09.89 Patentblatt 89/36**

(84) Benannte Vertragsstaaten:
**AT BE CH FR IT LI NL**

(56) Entgegenhaltungen:
**DE-A- 3 122 026**
**DE-B- 2 329 968**
**US-A- 2 789 866**
**US-A- 4 012 208**
**US-A- 4 343 771**

(73) Patentinhaber: **KSB Aktiengesellschaft,**
**Johann-Klein-Strasse 9, D-6710 Frankenthal (DE)**

(72) Erfinder: **Falb, Walter, Langer Berg 6, D-8570 Pegnitz**
**(DE)**
Erfinder: **Kratzer, Adolf, Fasanenweg 34,**
**D-8500 Nürnberg (DE)**

ACTORUM AG

## Beschreibung

Die Erfindung betrifft eine Rauchgasentschwefelungsanlage mit einem Sprühturm-Wäscher, in welchem eine über eine Vielzahl von Düsen versprühte Waschsuspension das den Sprühturm-Wäscher von unten nach oben durchströmende Rauchgas reinigt, wobei die sich in einem Sumpf am Boden des Sprühturm-Wäschers sammelnde Waschsuspension durch eine oder mehrere Kreiselpumpen über eine oder mehrere Druckrohrleitungen zu den Düsen, die in einzelnen Sprühdüsenebenen angeordnet sein können, gefördert wird.

Zur Entschwefelung der Rauchgase von mit fossilen Brennstoffen befeuerten Kraftwerken werden heute überwiegend Kalkwaschverfahren angewendet. Eine unter Verwendung von Kalk und Kalkstein hergestellte Waschsuspension wird mit Hilfe von Kreiselpumpen über ein im Sprühturm-Wäscher installiertes Düsensystem gesprüht. Das aus dem Rauchgas auszuwaschende Schwefeldioxyd wird von der Waschsuspension absorbiert, wobei das Absorptionsmittel mit dem Schwefeldioxyd unter Bildung von Kalziumsulfit reagiert. Durch Luftzugabe wird das Kalziumsulfit zu Kalziumsulfat oxidiert und als Gips, einem verwertbaren Endprodukt des Entschwefelungsprozesses, abgeschieden.

Bei den üblichen Größen der Sprühturm-Wäscher sind Waschsuspensionsströme bis zu einer Menge von 20 000 m³/h umzuwälzen. Bei den bekannten Rauchgasentschwefelungsanlagen werden diese Ströme auf mehrere außerhalb des Sprühturm-Wäschers angeordnete horizontale, von Drehstrommotoren angetriebene Kreiselpumpen aufgeteilt. Die aus dem Wäschersumpf gespeisten Zulaufleitungen der Kreiselpumpen sind dicht über dem Wäscherboden an radialen Stutzen angeschlossen. Die Druckleitungen werden, einzeln oder zu einer Sammelleitung zusammengeschlossen, außerhalb des Sprühturm-Wäschers hochgeführt. Von der Druckleitung bzw. den Druckleitungen zweigen in mehreren übereinanderliegenden Ebenen um den Sprühturm-Wäscher verlaufende Ringleitungen ab, über die die einzelnen Sprühdüsenebenen mit Waschsuspension versorgt werden.

Wegen der korrosiven und verschleißenden Wirkung der Waschsuspension sind die Rohrleitungen innen gummiert. Die einzelnen Wäscherpumpen können durch elastomer ausgekleidete, mit Stellantrieben für Fernbedienung ausgerüstete Absperrklappen gegen den Sprühturm-Wäscher abgesperrt werden. Ähnliches gilt für die einzelnen Ringleitungen zur Beaufschlagung der Sprühdüsen.

Pumpenaufstellung, Rohrleitungsführung und Instrumentierung sind nicht nur sehr aufwendig und erfordern einen erheblichen Platzbedarf, sie zwingen auch, vor allem bei größeren Wäscherleistungen, zu teuren Schallschutzmaßnahmen. Um das Absetzen von Gips im Wäschersumpf zu vermeiden, sind im unteren Bereich des Sprühturm-Wäschers gleichmäßig über den Umfang verteilte Rührwerke angeordnet, die für die notwendige Turbulenz der Waschsuspension im Wäschersumpf sorgen.

Aus der US-A 2 789 866 ist bereits ein Luftwäscher bekannt, bei dem auf außen hochgeführte Druckrohrleitungen verzichtet wird. Der vor allem in Klimaanlagen einsetzbare Luftwäscher verfügt allerdings nur über eine Sprühdüse. Zur Erreichung einer Feinverteilung des Sprühnebels wird die Sprühdüse unterstützt von einem oberhalb von ihr angeordneten, rotierenden Käfig. Die sich im Luftwäscher niederschlagende Flüssigkeit wird durch einen trichterförmigen Wäscherboden einer Rückführleitung zugeführt. Die Rückführleitung mündet in einen Sammelbehälter, der auch entfernt vom Luftwäscher aufgestellt sein kann. In den Sammelbehälter ist eine der Versorgung mit Druckflüssigkeit dienende Kreiselpumpe eingetaucht, deren Antriebsmotor sich nur teilweise unterhalb des maximal möglichen Flüssigkeitsspiegels befindet.

Der beschriebene Luftwäscher arbeitet nur mit einer von Feststoffen unbelasteten Flüssigkeit. Dies und der Umstand, daß er allein eine Sprühdüse besitzt und daß für die Verteilung des Sprühnebels ein Käfig mit dazugehörigen Antriebs- und Übertragungseinrichtungen notwendig ist, macht diese Lösung für Sprühturm-Wäscher mit dem oben geschilderten Aufgabenbereich ungeeignet.

Der Erfindung liegt die Aufgabe zugrunde, bei einer Rauchgasentschwefelungsanlage der eingangs beschriebenen Art den für die Aufstellung der Kreiselpumpen und die Installation der Rohrleitungen notwendigen Aufwand entscheidend zu verringern.

Die gestellte Aufgabe wird erfindungsgemäß dadurch gelöst, daß die Kreiselpumpen vollständig überflutbare Tauchmotorpumpen sind, die in Naßaufstellung im Innern des Sprühturm-Wäschers angeordnet sind und die bei freiem Zulauf aus dem Wäschersumpf in die innerhalb des Sprühturm-Wäschers hochgeführten Druckleitungen fördern.

Zweckmäßige und vorteilhafte Ausgestaltungen des Erfindungsgegenstandes ergeben sich aus den Unteransprüchen.

Der Grundgedanke der Erfindung besteht darin, die zur Beaufschlagung der Sprühdüsen notwendigen Pumpen und Rohrleitungen in den Sprühturm-Wäscher hineinzuverlegen, was nicht nur zur Verkürzung der Rohrleitungen und zu einer drastischen Verringerung der Geräuschemission führt, sondern was auch den Verzicht auf bisher notwendige Zubehöreinrichtungen ermöglicht. So fallen beispielsweise die Absperrorgane zwischen dem Sprühturm-Wäscher und den Pumpen fort. Durch mit den Tauchmotorpumpen zusammenwirkende Einbauten im Wäschersumpf werden die bisher verwendeten Rührer überflüssig, da die im Wäschersumpf angeordneten Tauchmotorpumpen die Bildung von Toträumen mit Feststoffablagerungen verhindern.

Anhand zweier Ausführungsbeispiele wird die Erfindung näher erläutert. Die Zeichnung zeigt in den

Fig. 1 und 2 eine Rauchgasentschwefelungsanlage mit mehreren Tauchmotorpumpen, die an im Sprühturm-Wäscher hochgeführte Druckrohrleitungen angeschlossen sind, in schematischer Darstellung und in

Fig. 3 eine erfindungsgemäße Rauchgasentschwefelungsanlage mit einer in der Druckrohrleitung angeordneten Tauchmotorpumpe.

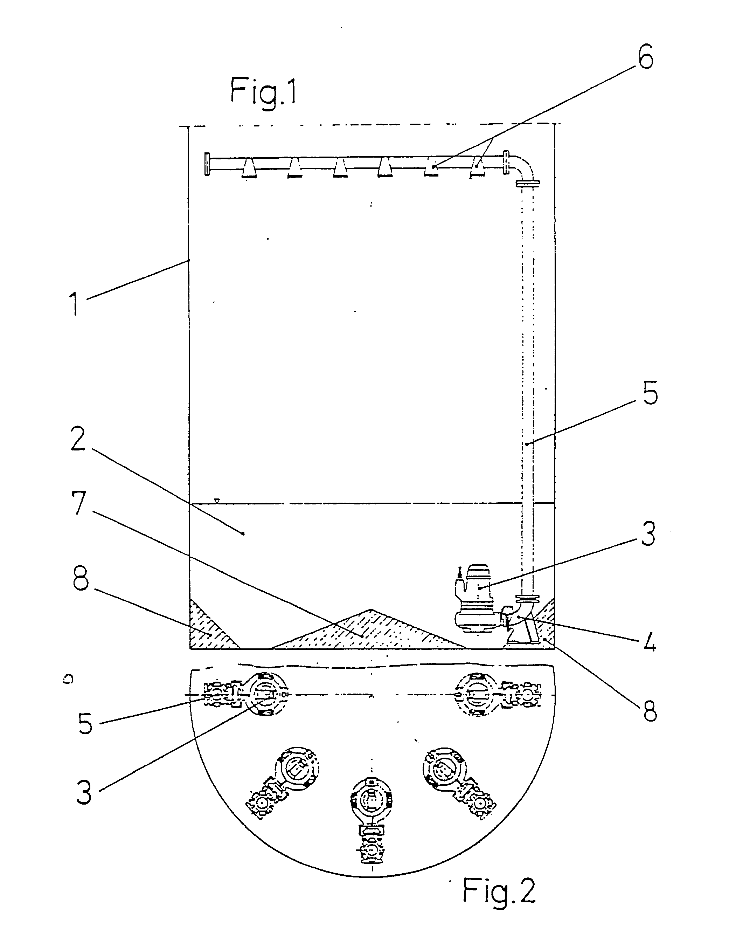

Der Sprühturm-Wäscher 1 der Fig. 1 und 2 besitzt einen Wäschersumpf 2, in dem Tauchmotorpumpen 3 angeordnet sind. Die Tauchmotorpumpen 3 sind durch ihr Eigengewicht mit jeweils einem Fußkrümmer 4 dichtend verbunden, der am Boden des Sprühturm-Wäschers 1 befestigt ist. Über Druckrohrleitungen 5 werden Sprühdüsen 6 von den Tauchmotorpumpen 3 mit der im Wäschersumpf befindlichen Waschsuspension beliefert. Zur Vermeidung von Toträumen, welche zu Feststoffablagerungen führen würden, sind am Boden des Sprühturm-Wäschers 1 Einbauten 7 und 8 vorgesehen, die zu den in einem Kreis angeordneten Tauchmotorpumpen 3 hin geneigt verlaufen. Die in der Waschsuspension befindlichen Feststoffe werden also durch die Schwerkraft und den Sog der Tauchmotorpumpen 3 abgelenkt und an einer Ablagerung gehindert. Während des Stillstandes der Tauchmotorpumpen abgesetzte Feststoffe werden mitgerissen, sobald die Tauchmotorpumpen in Betrieb genommen werden. Auf besondere Rührer kann verzichtet werden.

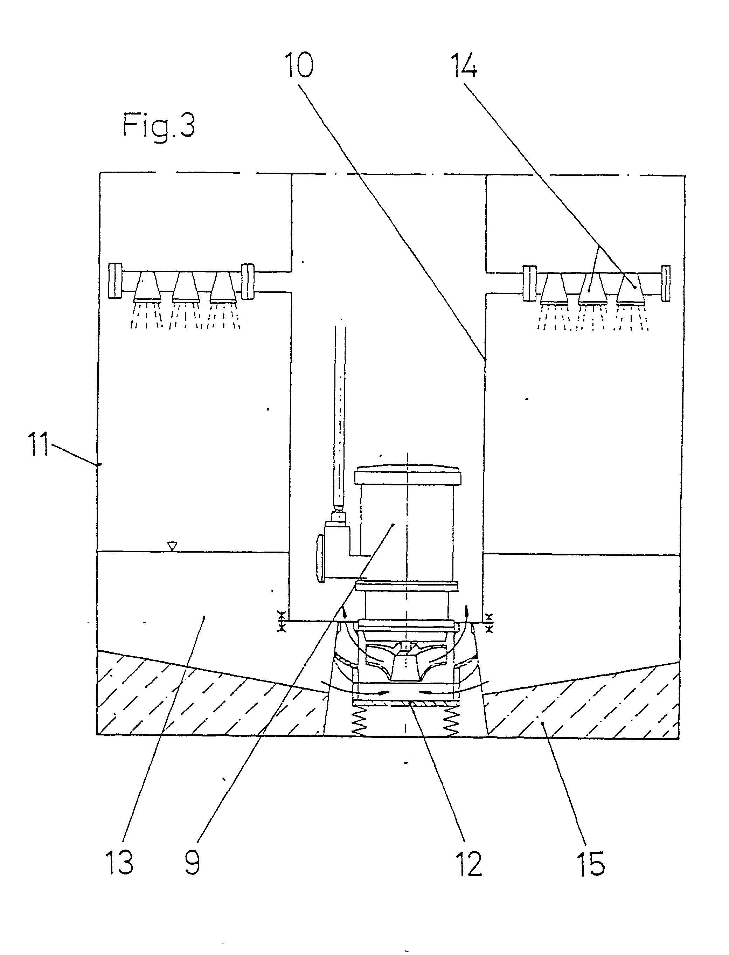

Bei der in der Fig. 3 dargestellten Variante ist eine Tauchmotorpumpe 9 in einer Druckrohrleitung 10 angeordnet, die über eine nicht dargestellte Öffnung im Sprühturm-Wäscher 11 zugänglich ist. Bei ihrer Installation wird die Tauchmotorpumpe 9 in der Druckrohrleitung 10 abgesenkt, wobei sie auf eine federbelastete Bodenplatte 12 trifft, die bei ausgebauter Tauchmotorpumpe 9 die Druckrohrleitung 10 gegen den Wäschersumpf 13 abschottet. Durch das Gewicht der Tauchmotorpumpe 9 wird die Bodenplatte 12 nach unten gedrückt, der Zulauf zur Tauchmotorpumpe 9 aus dem Wäschersumpf 13 wird freigegeben.

Über die Druckrohrleitung 10 werden wiederum Sprühdüsen 14 mit Waschsuspension beaufschlagt. Einbauten 15 am Boden des Sprühturm-Wäschers 11 verhindern auch bei dieser Ausführung die Bildung von Toträumen und Feststoffablagerungen.

**Patentansprüche**

1. Rauchgasentschwefelungsanlage mit einem Sprühturm-Wäscher, in welchem eine über eine Vielzahl von Düsen versprühte Waschsuspension das den Sprühturm-Wäscher von unten nach oben durchströmende Rauchgas reinigt, wobei die sich in einem Sumpf am Boden des Sprühturm-Wäschers sammelnde Waschsuspension durch eine oder mehrere Kreiselpumpen über eine oder mehrere Druckrohrleitungen zu den Düsen, die in einzelnen Sprühdüsenebenen angeordnet sein können, gefördert wird, dadurch gekennzeichnet, daß die Kreiselpumpen vollständig überflutbare Tauchmotorpumpen (3, 9) sind, die in Naßaufstellung im Innern des Sprühturm-Wäschers (1, 11) angeordnet sind und die bei freiem Zulauf aus dem Wäschersumpf (2, 13) in die innerhalb des Sprühturm-Wäschers (1, 11) hochgeführten Druckleitungen (5, 10) fördern.

2. Rauchgasentschwefelungsanlage nach Anspruch 1, dadurch gekennzeichnet, daß die Tauchmotorpumpe (9) im Innern der Druckrohrleitung (10) angeordnet ist und die Druckrohrleitung (10) an einem den Aufsetzflansch der Tauchmotorpumpe (9) bildenden Einlaufstück angeflanscht ist.

3. Rauchgasentschwefelungsanlage nach den Ansprüchen 1 und 2, gekennzeichnet durch eine im Sprühturm-Wäscher (11) angeordnete, der Absenkung der Tauchmotorpumpe (9) in die Druckrohrleitung (10) dienende Deckenöffnung und eine am unteren Ende der Druckrohrleitung (10) angeordnete, die Druckrohrleitung (10) gegen den Wäschersumpf (13) abschottende federbelastete Bodenplatte (12), die durch das Eigengewicht der Tauchmotorpumpe (9) in eine den Zulauf aus dem Wäschersumpf (13) freigebende Öffnungsstellung drückbar ist.

4. Rauchgasentschwefelungsanlage nach Anspruch 1, dadurch gekennzeichnet, daß die Tauchmotorpumpe (3) mit dem Fußkrümmer (4) einer seitlich innerhalb des Sprühturm-Wäschers (1) hochgeführten Druckrohrleitung (5) in an sich bekannter Weise durch ihr Eigengewicht dichtend verbunden ist.

5. Rauchgasentschwefelungsanlage nach den Ansprüchen 1 und 4, dadurch gekennzeichnet, daß für jede einzelne Sprühdüsenebene eine in ihrer Leistung auf die jeweilige Sprühdüsenebene abgestimmte Tauchmotorpumpe (3) im Wäschersumpf (2) installiert ist.

6. Rauchgasentschwefelungsanlage nach einem oder mehreren der Ansprüche 1 bis 5, dadurch gekennzeichnet, daß die elektrischen Versorgungskabel für Strom und Überwachungseinrichtungen in einem Kabelschutzrohr geführt sind, das durch lösbare Verbindungen aus mehreren in ihrer Länge auf die Ein- und Ausbaugegebenheiten abgestimmte Rohrstücke zusammengesetzt ist.

7. Rauchgasentschwefelungsanlage nach einem oder mehreren der Ansprüche 1 bis 6, gekennzeichnet durch mit der Tauchmotorpumpe (3, 9) zusammenwirkende, die Bildung von Toträumen mit Feststoffablagerungen verhindernde Einbauten (7, 8, 15).

8. Rauchgasentschwefelungsanlage nach einem oder mehreren der Ansprüche 1 bis 7, gekennzeichnet durch die Installation nur einer Tauchmotorpumpe (3, 9) mit einem zur Anpassung des Waschsuspensionsstromes an die verfahrenstechnischen Erfordernisse drehzahlregelbaren Antriebsmotor.

9. Rauchgasentschwefelungsanlage nach einem oder mehreren der Ansprüche 1 bis 7, gekennzeichnet durch die Installation mehrerer, zur Anpassung des Waschsuspensionsstromes an die verfahrenstechnischen Erfordernisse ab- oder zugeschalteten Tauchmotorpumpen (3).

## Claims

1. Flue gas desulphurization plant with a spray-type wash tower, in which a washing suspension emitted by a multitude of nozzles cleans the flue gas moving through the spray-type wash tower from the bottom to the top, with the washing suspension which gathers in a sump at the bottom of the spray-type wash tower being delivered to the nozzles, which can be arranged at individual spraying levels, by one or more centrifugal pumps through one or more discharge pipelines, characterized in that the centrifugal pumps are fully floodable submersible motor pumps (3, 9), which are arranged in the interior of the spray-type wash tower (1, 11) in wet installation and which, given free inflow from the wash sump (2, 13), deliver into the discharge pipes (5, 10) installed vertically in the spray-type wash tower (1, 11).

2. Flue gas desulphurization plant according to patent claim 1, characterized in that the submersible motor pump (9) is installed in the interior of the discharge pipeline (10) and that the discharge pipeline (10) is flanged to an inlet piece forming the seat flange of the submersible motor pump (9).

3. Flue gas desulphurization plant according to patent claims 1 and 2, characterized by an opening in the spray-type wash tower (11) ceiling, serving to lower the submersible motor pump (9) into the discharge pipeline (10), and by a springloaded floor plate (12) – arranged at the bottom of the discharge pipeline (10) and shutting off the discharge pipeline (19) against the wash sump (13) –, which can be pushed into an open position releasing the inflow from the wash sump (13) by the pump's own weight.

4. Flue gas desulphurization plant according to patent claim 1, characterized in that the submersible motor pump (3) is connected to the foot elbow (4) of a vertical discharge pipeline (5) installed laterally in the spray-type wash tower (1), with the joint being rendered leak-proof in a customary way by the pump's own weight.

5. Flue gas desulphurization plant according to patent claims 1 and 4, characterized in that for each individual spray nozzle level a submersible motor pump (3) whose output is adapted to the corresponding spray nozzle level is installed in the wash sump (2).

6. Flue gas desulphurization plant according to one or more of patent claims 1 to 5, characterized in that the electric supply cables for the mains and the control devices are placed in a cable duct which by means of detachable joints is assembled from several pipe sections whose lengths are adapted to the installation and dismantling conditions given.

7. Flue gas desulphurization plant according to one or more of patent claims 1 to 6, characterized by internal structures (7, 8, 15) interacting with the submersible motor pump (3, 9) to avoid the formation of dead spaces with solid deposits.

8. Flue gas desulphurization plant according to one or more of patent claims 1 to 7, characterized by the installation of just one submersible motor pump (3, 9) equipped with a variable speed drive motor to adapt the washing suspension flow to the process requirements.

9. Flue gas desulphurization plant according to one or more of patent claims 1 to 7, characterized by the installation of several submersible motor pumps (3) started up and shut down as required to adapt the washing suspension flow to the process requirements.

## Revendications

1. Installation de désulfuration des gaz avec une colonne de lavage par pulvérisation dans laquelle une suspension de lavage émise par une multitude de tuyères nettoie les gaz traversant la colonne de lavage par pulvérisation du bas vers le haut; la suspension de lavage collectée dans un puisard au fond de la colonne de lavage par pulvérisation étant pompée par une ou plusieurs pompes centrifuges dans une ou plusieurs conduites de refoulement aux tuyères qui peuvent être arrangées dans différents plans de tuyères de pulvérisation, caractérisé par le fait que les pompes centrifuges sont des pompes submersibles complètement inondables (3, 9) montées en installation noyée à l'intérieur de la colonne de lavage par pulvérisation (1, 11) et refoulant le liquide à véhiculer – qui s'écoule sans obstacle par amenée gravitaire depuis le puisard de la colonne (2, 13) vers la pompe – dans les conduites de refoulement (5, 10) verticales installées à l'intérieur de la colonne de lavage par pulvérisation (1, 11).

2. Installation de désulfuration des gaz suivant la revendication 1, caractérisée par l'installation de la pompe submersible (9) à l'intérieur de la conduite de refoulement (10) et par la conduite de refoulement (10) qui est bridée à une pièce d'entrée servant à la pompe submersible (9) de bride de pose.

3. Installation de désulfuration des gaz suivant les revendications 1 et 2, caractérisée par une ouverture dans le plafond de la colonne de lavage par pulvérisation (11) servant à la descente de la pompe submersible (9) dans la conduite de refoulement (10) et par une plaque de base (12) à ressort installée au fond de la conduite de refoulement (10) et assurant l'étanchéité entre la conduite de refoulement (10) et le puisard de la colonne (13), cette plaque de base pouvant être poussée par le poids propre de la pompe submersible (9) dans une position d'ouverture libérant ainsi l'amenée du puisard de la colonne (13).

4. Installation de désulfuration des gaz suivant la revendication 1, caractérisée par la pompe submersible (3) qui est connectée au coude de pied (4) d'une conduite verticale de refoulement (5) installée latéralement à l'intérieur de la colonne de lavage par pulvérisation (1), l'étanchéité étant assurée par le poids propre de la pompe – une méthode bien connue.

5. Installation de désulfuration des gaz suivant les revendications 1 et 4, caractérisée par l'installation d'une pompe submersible (3) dans le puisard de la colonne (2), le débit de cette pompe pouvant être adapté au plan correspondant des tuyères de pulvérisation.

6. Installation de désulfuration des gaz suivant une ou plusieurs des revendications 1 à 5, caractérisée par le guidage des câbles électriques d'alimentation et des câbles électriques des dispositifs de surveillance dans une conduite de protection de câble se composant de plusieurs tronçons de tuyau dont la longueur dépend des conditions de montage et de démontage et qui sont connectés par des raccords desserrables.

7. Installation de désulfuration des gaz suivant une ou plusieurs des revendications 1 à 6, caractérisée par l'installation de chicanes en interaction avec la pompe submersible (3, 9) empêchant la formation de zones mortes qui facilitent le dépôt de substances solides.

8. Installation de désulfuration des gaz suivant une ou plusieurs des revendications 1 à 7, caractérisée par l'installation d'une seule pompe submersible (3, 9) avec un moteur d'entraînement à vitesse variable permettant l'adaptation du débit de la suspension de lavage aux exigences du procédé industriel.

9. Installation de désulfuration des gaz suivant une ou plusieurs des revendications 1 à 7, caractérisée par l'installation de plusieurs pompes submersibles (3) pouvant être mises en marche ou à l'arrêt ce qui permet l'adaptation du débit de la suspension de lavage aux exigences du procédé industriel.

Fig.1

Fig.2

Fig.3

10    14

11

13    9    12    15